# EUROPEAN PATENT SPECIFICATION

(11) **EP 2 803 545 B1**
(45) Date of publication and mention of the grant of the patent: **04.01.2017**
(21) Application number: 14168703.8
(22) Date of filing: 16.05.2014
(51) Int. Cl.: B60S 5/04

(54) **Improved compressed air gun**
Verbesserte Druckluftpistole
Pistolet à air comprimé amélioré

(30) Priority: 17.05.2013 IT VI20130137
(43) Date of publication of application: 19.11.2014
(73) Proprietor: GENTILIN SRL, 36070 TRISSINO (VI) (IT)
(72) Inventor: Gentilin, Giampaolo, 36070 TRISSINO (VI) (IT); Gentilin, Giuseppe, 36070 BROGLIANO (VI) (IT)
(74) Representative: Bonini, Ercole

(56) References cited:
- US-A- 1 834 033
- US-A- 4 658 869
- US-A- 5 780 734
- US-A1- 2002 078 754

## Description

The present invention concerns a compressed air gun particularly suited to inflate tyres.

Guns for inflating tyres are available on the market and these guns comprise a body provided with a grip, said body being provided with an inlet fitting for connecting the gun to a compressed air supply pipe and an outlet fitting for connecting a flexible pipe provided with a dispenser that can be coupled with the tyre inflation valve.

The delivery of the compressed air is controlled by a three-position valve that is operated by the operator through a control lever.

It is thus possible to identify:
- a first position in which the control lever is at rest and the valve does not allow the compressed air to be delivered to the tyre;
- a second position in which the control lever is pressed completely and the valve allows the compressed air to be delivered to the tyre;
- a third position in which the control lever is partially pressed and the valve makes it possible to discharge the air present in the tyre in order to adjust its inflation pressure.

The known guns of the type described above pose the acknowledged drawback that the valve with which they are provided has a complex structure, being constituted by several parts that cooperate with one another. Embodiments are known, for example, in which the valve is provided with a shutter slidingly fitted in a seat that has been obtained in the gun's body and is constituted by two parts that in turn are slidingly coupled with each other.

It is evident that the complex construction structure of the valve involves high gun production and assembly costs.

Furthermore, the complex construction structure also increases the risk of failures and seizures that reduce the reliability of the gun.

Patent document US 2002/0078754 A1 is also known, which describes a compressed air gun complete with a pressure gauge, an air delivery pipe and a valve controlling the delivered air flow, suited to be operated by the user. The control valve comprises a shutter 17 slidingly fitted in the body of the valve 7, which is operated by the user through a grip 6.

The gun described in the above mentioned patent document poses the drawback that the sealing gaskets 7B and 7C, as shown in the figures, are housed in seats obtained in the shutter 7 and thus follow the latter during the movement it performs following the action exerted by the user on the grip 6.

This leads to rapid wear of the gaskets, especially because of the stress to which they are subjected when they slide against the edges of the channels through which the inlet pipes 12 and outlet pipes 13 communicate with the control chamber 15 in which the shutter 17 slides.

The present invention intends to overcome all the above mentioned drawbacks.

In particular, it is a first object of the invention to provide a compressed air gun which, compared to equivalent compressed air guns available on the market, has its air delivery valve made up of a smaller number of component parts.

It is another object of the invention to provide a compressed air gun whose construction structure is simpler compared to equivalent guns of the known type.

It is a further object of the invention to provide a valve whose sealing gaskets are less subject to wear than the gaskets of the valve described in patent document US 2002/0078754 A1.

It is another, yet not the least object of the invention to provide a compressed air gun that is easier to assemble compared to equivalent guns of the known type.

The objects described above are achieved by a compressed air gun constructed according to the contents of the main claim, to which reference is made.

Other characteristics of the gun that is the subject of the invention are described in the dependent claims.

Advantageously, the gun that is the subject of the invention is more reliable than known guns equivalent to it.

Furthermore, advantageously, the smaller number of the components that make it up reduces the need for maintenance operations.

Finally, to advantage, the special configuration of the shutter and of the chamber in which it is housed makes it possible to maintain the gaskets fixed in their position and reduce their wear.

The objects and advantages listed above and any other objects and advantages will be highlighted in greater detail in the description of a preferred but non-exclusive embodiment of the gun of the invention that is provided below with reference to the attached drawings, wherein:
- Figure 1 shows a partially exploded view of the gun that is the subject of the invention;
- Figures 2, 3 and 4 show three different configurations of use of the gun that is the subject of the invention;
- Figures 2a, 3a, 4a show enlarged details of Figures 2, 3 and 4, respectively.

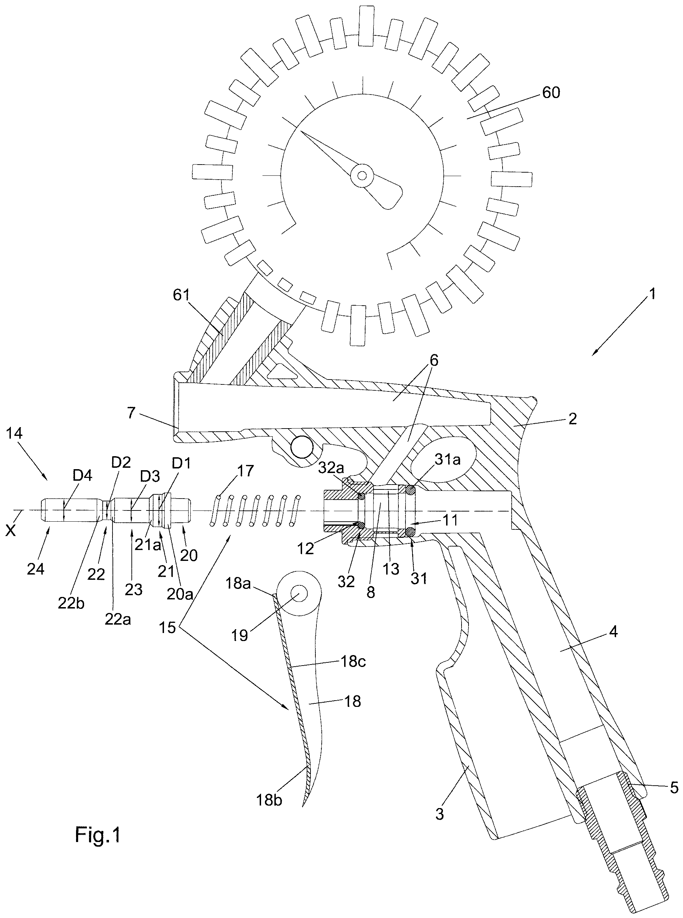

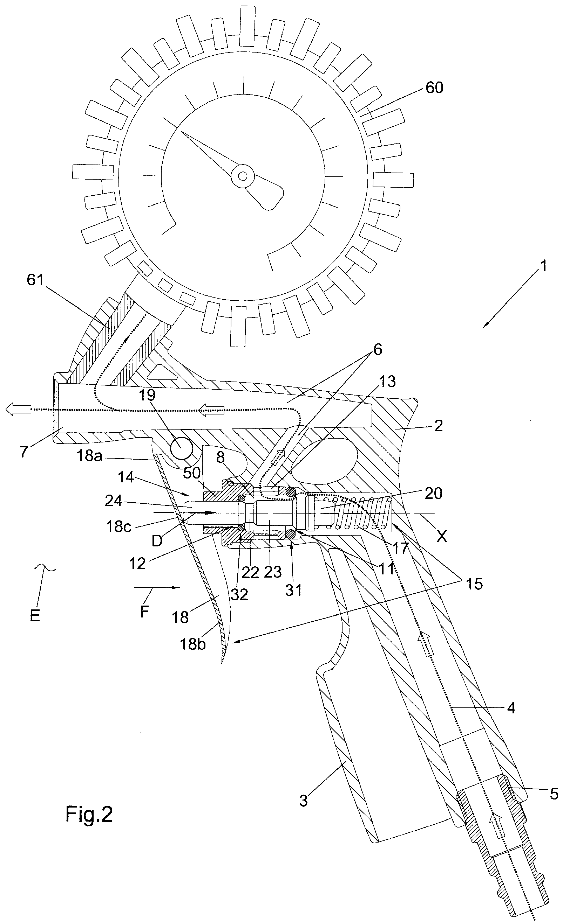

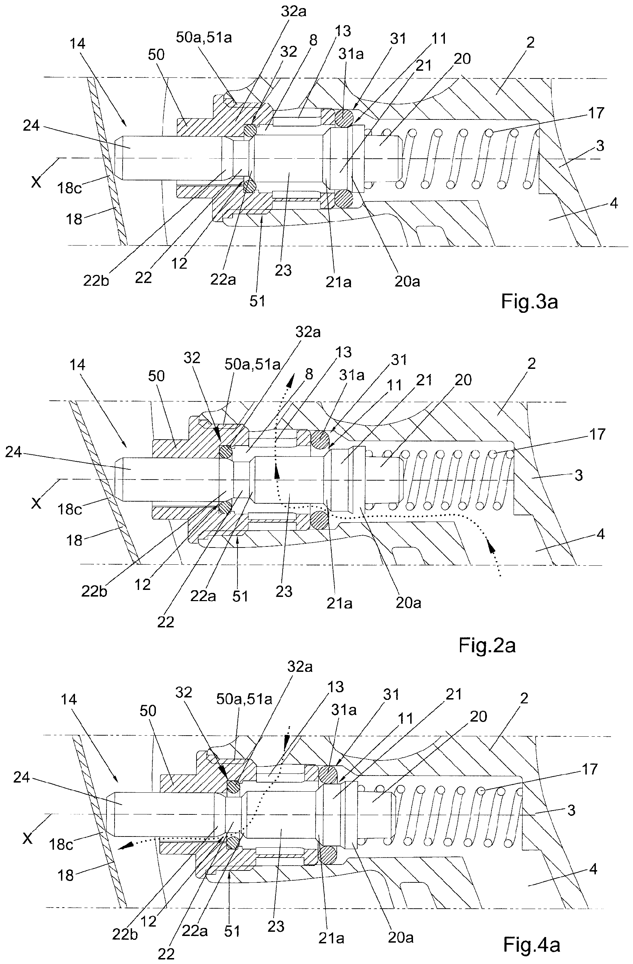

The compressed air gun that is the subject of the invention is shown in a partially exploded view in Figure 1 and in three different configurations of use in Figures 2, 3 and 4, where it is indicated as a whole by **1.**

It can be observed that it comprises a body **2** which is provided with a grip **3** and in which it is possible to identify:
- a first chamber **4** provided with a first mouth **5** for communication with a compressed air supply line, not illustrated herein;
- a second chamber **6** provided with a second mouth **7** for communication with an element suited to receive compressed air, not illustrated herein, either;
- an intermediate chamber **8** included between the first chamber **4** and the second chamber **6.**

In turn, in the intermediate chamber **8** it is possible to identify the following:
- a first flow way **11** configured so that it can be placed in communication with the first chamber **4;**
- a second flow way **12** configured so that it can be placed in communication with the external environment **E;**
- a third flow way **13** included between the first flow way **11** and the second flow way **12** and always in communication with the second chamber **6.**

A shutter **14** is arranged so that it passes through the first flow way **11** and the second flow way **12,** said shutter cooperating with moving means **15** that are configured so as to place it in different positions with respect to said flow ways. The shutter **14** and the flow ways **11, 12** and **13** define the valve by means of which the operator, acting on the moving means **15,** defines different operating positions of the gun.

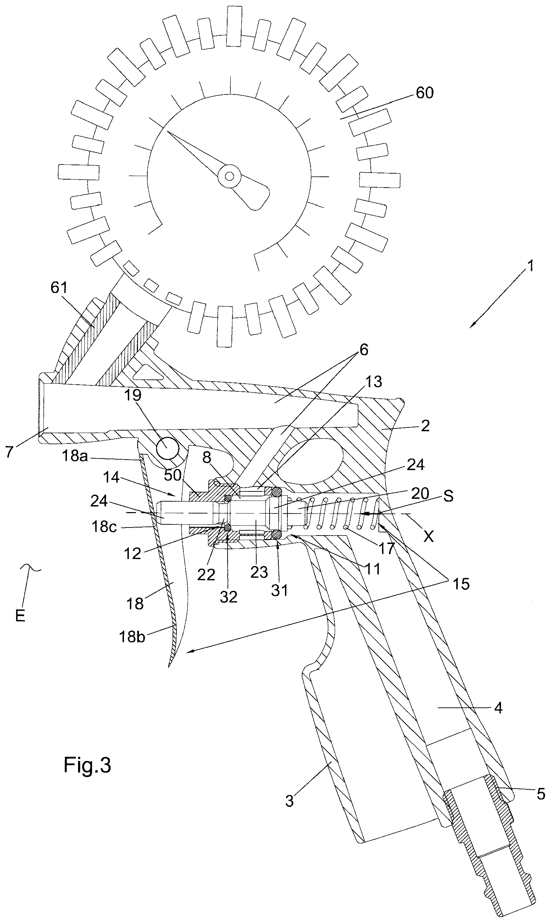

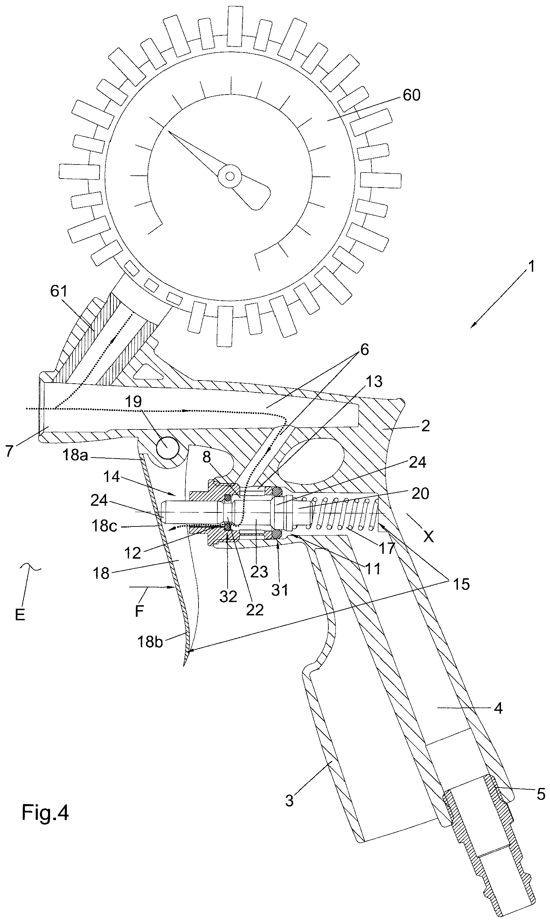

In particular, it can be observed that said different operating positions comprise:
- a first position, shown in Figure 2, in which the second flow way **12** is closed and the first flow way **11** is open and places the first chamber **4** in communication with the intermediate chamber **8;**
- a second position, shown in Figure 3, in which the second flow way **12** and the first flow way **11** are both closed;
- a third position, shown in Figure 4, in which the first flow way **11** is closed and the second flow way **12** is open so as to place the intermediate chamber 8 in communication with the external environment **E.**

According to the invention, the shutter **14** is a shaped body made as a monoblock body which, as can be observed in particular also in Figure 1 and in the detail figures 2a, 3a and 4a, develops mainly according to a longitudinal direction **X,** and in which it is possible to identify a plurality of cylindrical areas **20, 21, 22, 23** and **24** coaxial to one another and arranged one after the other. Said areas comprise:
- an initial area **20;**
- a first area **21** configured so that it cooperates with the first flow way **11** through the interposition of first sealing means **31;**
- a second area **22** configured so that it cooperates with the second flow way **12** through the interposition of second sealing means **32;**
- an intermediate area **23** included between the first area **21** and the second area **22** and configured so that it can be arranged at the level of the third flow way **13;**
- a terminal area **24** arranged downstream of the second area **22,**
the initial area **20** and the terminal area **24** being in contact with the moving means **15.**

In particular, it can be observed in Figure 1 that the diameter **D1** of the first area **21** is larger than the diameter **D3** of the intermediate area **23** adjacent to it.

It can also be noted that the second area **22** is included between the intermediate area **23** and the terminal area **24** and its diameter **D2** is smaller than both the diameter **D3** of the intermediate area **23** and the diameter **D4** of the terminal area **24.**

It can be noted, furthermore, that the second area **22** comprises also a first bevelled area **22a** for connection to the intermediate area **23** and a second bevelled area **22b** for connection to the terminal area **24,** wherein said bevelled areas are configured so as to sealingly cooperate alternatively with the second flow way **12** and in particular with the second sealing means **32** that are present therein.

In particular, each bevelled area **22a, 22b,** as described here below, ensures tightness at the level of the second flow way **12,** through interference with the second sealing means **32** present therein, in order to define the different operating configurations of the gun shown in Figures from 2 to 4.

It can also be observed that a third bevelled area **21a** connects the first area **21** and the intermediate area **23** to each other.

Finally, the initial area **20** comprises a bevelled collar **20a** that delimits it with respect to the first area **21** and ensures tightness at the level of the first flow way **11** when, together with the first area **21,** interferes with the first sealing means **31,** as shown in Figures 3 and 3a.

Concerning the moving means **15,** it can be observed that they comprise a counteracting spring **17** housed in the first chamber **4** and interposed between the body **2** of the gun and the initial area **20** of the shutter **14,** as well as a manoeuvring lever **18** having one end **18a** connected to the body **2** of the gun through a pin **19,** the opposite end **18b** free to be held by an operator and the intermediate area **18c** placed in contact with the terminal area **24** of the shutter **14.**

Preferably but not necessarily, the intermediate chamber **8** is created in a shaped sleeve **50** that is arranged in a housing **51** obtained in the body **2** of the gun.

In particular, the first flow way **11** and the second flow way **12** are created in the ends of the shaped sleeve **50,** while the third flow way **13** is included between the first flow way **11** and the second flow way **12** and is made in the lateral surface of the shaped sleeve **50.**

The shaped sleeve **50** and the housing **51** that accommodates it are furthermore provided with threaded means **50a, 51a,** respectively, so that they can removably connected to each other.

Concerning, finally, the first sealing means **31** and the second sealing means **32,** they are constituted by elastomeric rings, respectively **31 a** and **32a.**

In the case described herein, in which the intermediate chamber **8** is obtained in the shaped sleeve **50,** the first ring **31a** is included between the shaped sleeve **50** and the corresponding housing **51,** while the second ring **32a** is housed in the shaped sleeve **50.**

In practice, when the gun is at rest, it is in the configuration shown in Figure 3, in which the counteracting spring **17** pushes the shutter **14** to the left in the direction indicated by the arrow **S.**

In this configuration, the second flow way **12** is closed due to the interference created between the first bevelled area **22a** of the second area **22** and the second sealing means **32,** and also the first flow way **11** is closed due to the interference of the first area **21** and the bevelled collar **20a** with the first sealing means **31.**

In these conditions, all the flow ways are closed, the second chamber **6** and the intermediate chamber **8** communicate with each other but do not communicate with the first chamber **4** and consequently there is no air flow from the first chamber **4,** and therefore from the compressed air supply line, towards the second chamber **6** and thus towards the element suited to receive said compressed air.

When the operator intervenes on the manoeuvring lever **18** and presses it completely in the direction indicated by the arrow **F** that can be observed in Figure 2 exerting a force sufficient to overcome the counteracting force of the spring **17,** the shutter **14** is moved to the right as indicated by the arrow **D** and assumes the configuration that can be observed, in which the first flow way **11** is open while the first bevelled area **22a** of the second area **22** comes in contact with the second sealing means **32** while keeping the second flow way **12** closed.

In this configuration, the first chamber **4** and the second chamber **6** communicate with each other through the intermediate chamber **8,** in such a way as to allow a flow of compressed air to move from the first chamber **4,** and therefore from the supply line, towards the second chamber **6** and thus towards the element suited to receive said compressed air.

In these conditions, if the element suited to receive said compressed air is a tyre, the tyre itself is inflated.

During said inflation step, the pressure is kept under control through the pressure gauge **60** that, as can be observed, is connected to the second chamber **6** through the connection duct **61.**

In order to check the pressure value reached in the tyre, the operator releases the manoeuvring lever **18** and makes the gun assume again the configuration shown in Figure 3, which makes it possible to read, on the pressure gauge **60,** the pressure value reached inside the tyre.

If the pressure value read corresponds to the desired value, inflation is completed.

If, instead, the pressure value read is lower than the value to be reached, the operator presses the manoeuvring lever **18** again and places the gun back in the position shown in Figure 2, in such a way as to introduce other compressed air in the tyre.

To check again the pressure value that has been reached, the operator releases the manoeuvring lever **18** again, repositioning the gun in the configuration shown in Figure 3, so that it is possible to read the new pressure value on the pressure gauge **60.**

If this pressure value exceeds the desired value, the operator can partially discharge the compressed air from the tyre using the manoeuvring lever **18** and pressing it again in the direction indicated by the arrow **F** shown in Figure 4, exerting a force sufficient to compress the counteracting spring **17** without, however, allowing the shutter **14** to reach its end of stroke.

In this way, the shutter **14** places the second area **22** with the bevelled areas **22a** and **22b** astride the second sealing means **32** in such a way as to place the intermediate chamber **8,** and therefore also the second chamber **6** that communicates with it, in communication with the external environment **E,** in such a way as to partially discharge the pressure present in the tyre.

At the same time, it is possible to observe that the stroke set for the manoeuvring lever **18** is such that the movement of the shutter **14** releases the first sealing means **31** from contact with the bevelled collar **20a** while the first area **21** maintains contact with the first sealing means **31.**

In this way, the first flow way **11** remains closed and the only air flow occurs in the second flow way **12** through which the excess pressure present in the tyre is discharged in the external environment **E.**

This flow continues for the whole time during which the manoeuvring lever **18** remains in the configuration shown in Figure 4.

The operator, during this pressure adjustment operation, can intervene repeatedly by rapidly pressing and releasing the manoeuvring lever **18** until reaching the desired pressure value in the tyre.

The description provided above clearly shows that the improved gun that is the subject of the invention achieves all the set objects.

In particular, it can be noted that the monoblock structure of the shutter **14** simplifies the production of the gun's valve compared to the solutions of the known art, in which the shutter is made up of several component parts slidingly coupled with one another.

Also the assembly of the gun is simplified, in fact, as shown in any one of Figures from 2 to 4, it is sufficient to mount the sealing means, the shutter and the counteracting spring on the sleeve **50** and then assemble the unit obtained in this way, which substantially constitutes the valve, on the valve body, screwing the sleeve **50** in the housing **51** that accommodates it.

The simple construction and assembly reduce the gun's production costs. Finally, said simple construction and the reduced number of component parts make the gun that is the subject of the invention more reliable.

In the construction stage, the gun that is the subject of the invention can be subjected to improvements and modifications that are neither described in the text nor illustrated in the drawings.

These constructions improvements and variants must all be considered protected by the present patent, provided that they fall within the scope of the following claims.

## Claims

1. Compressed air gun (1) comprising a body (2) which is provided with a grip (3) and in which it is possible to identify:
- a first chamber (4) provided with a first mouth (5) for communication with a compressed air supply line;
- a second chamber (6) provided with a second mouth (7) for communication with an element suited to receive compressed air;
- an intermediate chamber (8) in which it is possible to identify:
- a first flow way (11) configured so that it can be placed in communication with said first chamber (4);
- a second flow way (12) configured so that it can be placed in communication with the external environment (E);
- a third flow way (13) communicating with said second chamber (6) and included between said first flow way (11) and said second flow way (12);
- a shutter (14) arranged so that it passes through said first flow way (11) and said second flow way (12);
- moving means (15) configured so as to define different positions of said shutter (14) with respect to said flow ways, said positions comprising:
- a first position in which said second flow way (12) is closed and said first flow way (11) is open so as to place said first chamber (4) in communication with said intermediate chamber (8);
- a second position in which said second flow way (12) and said first flow way (11) are both closed;
- a third position in which said first flow way (11) is closed and said second flow way (12) is open so as to place said intermediate chamber (8) in communication with the external environment (E),
said shutter (14) comprising a single shaped body that develops mainly along a longitudinal direction (X) and in which it is possible to identify a plurality of cylindrical areas (20, 21, 22, 23, 24) coaxial to one another and arranged one after the other which comprise:
- an initial area (20);
- a first area (21) configured so that it cooperates with said first flow way (11) through the interposition of first sealing means (31);
- a second area (22) configured so that it cooperates with said second flow way (12) through the interposition of second sealing means (32);
- an intermediate area (23) included between said first area (21) and said second area (22) and configured so as to be arranged at the level of said third flow way (13);
- a terminal area (24) arranged downstream of said second area (22), said initial area (20) and said terminal area (24) being in contact with said moving means (15);
said gun being **characterized in that**:
- said second area (22) is included between said intermediate area (23) and said terminal area (24) and its diameter (D2) is smaller than the diameters of said intermediate area (23) and of said terminal area (24);
- said second area (22) comprises a first bevelled area (22a) for connection to said intermediate area (23) and a second bevelled area (22b) for connection to said terminal area (24);
- said bevelled areas (22a, 22b) are configured so as to cooperate alternatively with said second sealing means (32);
- said first area (21) is connected to said intermediate area (23) adjacent to it through a third bevelled area (21 a).

2. Compressed air gun (1) according to claim 1), **characterized in that** the diameter (D1) of said first area (21) is larger than the diameter (D3) of said intermediate area (23) and is configured so as to cooperate with said first sealing means (31).

3. Compressed air gun (1) according to any of the preceding claims, **characterized in that** said initial area (20) comprises a bevelled collar (20a) that delimits it with respect to said first area (21).

4. Compressed air gun (1) according to any of the preceding claims, **characterized in that** said moving means (15) comprise:
- a counteracting spring (17) housed in said first chamber (4) and interposed between said body (2) of said gun and said initial area (20) of said shutter (14);
- a manoeuvring lever (18) having one end (18a) connected to said body (2) of said gun through a pin (19), the opposite end (18b) free to be held by an operator and the intermediate area (18c) placed in contact with said terminal area (24) of said shutter (14).

5. Compressed air gun (1) according to any of the preceding claims, **characterized in that** said intermediate chamber (8) is created in a shaped sleeve (50) arranged in a housing (51) obtained in said body (2) of said gun, said shaped sleeve (50) being provided with said first flow way (11), said second flow way (12) and said third flow way (13).

6. Compressed air gun (1) according to any of the preceding claims, **characterized in that** said first sealing means (31) comprise at least a first ring in elastomer (31 a) arranged at the level of said first flow way (11) and said second sealing means (32) comprise at least a second ring in elastomer (32a) arranged at the level of said second flow way (12).

7. Compressed air gun (1) according to claim 5), **characterized in that** said shaped sleeve (50) and said housing (51) accommodating it are provided with threaded means (50a, 51a) suited to ensure mutual connection.

## Patentansprüche

1. Druckluftpistole (1), einen Körper (2) umfassend, der mit einem Griff (3) versehen ist, und in dem Folgendes identifiziert werden kann:
- eine erste Kammer (4) mit einer ersten Öffnung (5) zur Kommunikation mit einer Druckluftversorgungsleitung;
- eine zweite Kammer (6) mit einer zweiten Öffnung (7) zur Kommunikation mit eine, Element, das dazu geeignet ist, Druckluft aufzunehmen;
- einer Zwischenkammer (8), in der Folgendes identifiziert werden kann:
- einen ersten Flussweg (11), der so konfiguriert ist, dass er in Kommunikation mit der besagten ersten Kammer (4) platziert werden kann;
- einen zweiten Flussweg (12), der so konfiguriert ist, dass er in Kommunikation mit der externen Umgebung (E) platziert werden kann;
- einen dritten Flussweg (13), der mit der besagten zweiten Kammer (6) kommuniziert und zwischen dem besagten ersten Flussweg (11) und dem besagten zweiten Flussweg (12) eingeschlossen ist;
- einen Absperrschieber (14), der so angeordnet ist, dass er den besagten ersten Flussweg (11) und den besagten zweiten Flussweg (12) passiert;
- Bewegungsmittel (15), die so konfiguriert sind, dass sie unterschiedliche Positionen des besagten Absperrschiebers (14) bezüglich der besagten Flussmittel definieren, wobei die besagten Positionen Folgendes umfassen:
- eine erste Position, in welcher der besagte zweite Flussweg (12) geschlossen ist und der besagte erste Flussweg (11) offen ist, so dass die besagte erste Kammer (4) mit der besagten Zwischenkammer (8) kommuniziert;
- eine zweite Position, in welcher sowohl der besagte zweite Flussweg (12) als auch der besagte erste Flussweg (11) geschlossen sind;
- eine dritte Position, in welcher der besagte erste Flussweg (11) geschlossen ist und der besagte zweite Flussweg (12) offen ist, so dass die besagte Zwischenkammer (8) mit der externen Umgebung (E) kommuniziert,
wobei der besagte Absperrschieber (14) einen einzelnen, geformten Körper umfasst, der sich hauptsächlich entlang einer Längsrichtung (X) entwickelt und in dem eine Vielzahl zylindrischer Bereiche (20, 21, 22, 23, 24) identifiziert werden können, die koaxial zueinander stehen und hintereinander angeordnet sind, welche Folgendes umfassen:
- einen Anfangsbereich (20);
- einen ersten Bereich (21), der so konfiguriert ist, dass er durch Einfügen erster Abdichtmittel (31) mit dem besagten ersten Flussweg (11) zusammenwirkt;
- einen zweiten Bereich (22), der so konfiguriert ist, dass er durch Einfügen zweiter Abdichtmittel (32) mit dem besagten zweiten Flussweg (12) zusammenwirkt;
- einen Zwischenbereich (23), der zwischen dem besagten ersten Bereich (21) und dem besagten zweiten Bereich (22) eingeschlossen und so konfiguriert ist, dass er auf der Ebene des besagten dritten Flussweges (13) angeordnet ist;
- einen Endbereich (24), der stromabwärts des besagten zweiten Bereichs (22) angeordnet ist,
wobei der besagte erste Bereich (20) und der besagte Endbereich (24) mit den besagten Bewegungsmitteln (15) in Kontakt sind;
wobei die besagte Pistole **dadurch gekennzeichnet ist, dass:**
- der besagte zweite Bereich (22) zwischen dem besagten Zwischenbereich (23) und dem besagten Endbereich (24) eingeschlossen ist und sein Durchmesser (D2) kleiner ist als die Durchmesser des besagten Zwischenbereichs (23) und des besagten Endbereichs (24);
- der besagte zweite Bereich (22) einen ersten abgeschrägten Bereich (22a) für die Verbindung mit dem besagten Zwischenbereich (23) und einen zweiten abgeschrägten Bereich (22b) für die Verbindung mit dem besagten Endbereich (24) umfasst;
- die besagten abgeschrägten Bereiche (22a, 22b) so konfiguriert sind, dass sie alternativ mit den besagten zweiten Dichtmitteln (32) zusammenwirken;
- der besagte erste Bereich (21) über einen dritten abgeschrägten Bereich (21 a) mit dem besagten, an ihn angrenzenden Zwischenbereich (23) verbunden ist.

2. Druckluftpistole (1) gemäß Patentanspruch 1), **dadurch gekennzeichnet, dass** der Durchmesser (D1) des besagten ersten Bereichs (21) größer ist als der Durchmesser (D3) des besagten Zwischenbereichs (23), und so konfiguriert ist, dass er mit den besagten ersten Dichtmitteln (31) zusammenwirkt.

3. Druckluftpistole (1) gemäß eines jeden der vorstehenden Patentansprüche, **dadurch gekennzeichnet, dass** der besagte Anfangsbereich (20) einen abgeschrägten Bund (20a) umfasst, der ihn bezüglich des besagten ersten Bereichs (21) begrenzt.

4. Druckluftpistole (1) gemäß eines jeden der vorstehenden Patentansprüche, **dadurch gekennzeichnet, dass** die besagten Bewegungsmittel (15) Folgendes umfassen:
- eine Gegenfeder (17), die in der besagten ersten Kammer (4) und zwischen dem besagten Körper (2) der besagten Pistole und dem besagten Anfangsbereich (20) des besagten Absperrschiebers (14) positioniert ist;
- einen Betätigungshebel (18), der an einem Ende (18a) durch einen Bolzen (19) mit dem besagten Körper (2) der besagten Pistole verbunden ist und dessen entgegengesetztes Ende (18b) frei ist, um durch einen Bediener gehalten zu werden, und der Zwischenbereich (18c) in Kontakt mit dem besagten Endbereich (24) des besagten Absperrschiebers (14) positioniert ist.

5. Druckluftpistole (1) gemäß eines jeden der vorstehenden Patentansprüche, **dadurch gekennzeichnet, dass** die besagte Zwischenkammer (8) in einer geformten Muffe (50) in einem Gehäuse (51) erzeugt ist, welches in dem besagten Körper (2) der besagten Pistole ausgeführt ist, wobei die besagte geformte Muffe (50) den besagten ersten Flussweg (11), den besagten zweiten Flussweg (12) und den besagten dritten Flussweg (13) aufweist.

6. Druckluftpistole (1) gemäß eines jeden der vorstehenden Patentansprüche, **dadurch gekennzeichnet, dass** die besagten ersten Dichtmittel (31) wenigstens einen ersten Ring aus Elastomer (31 a) aufweisen, der auf der Ebene des besagten ersten Flusswegs (11) angeordnet ist, und dass die besagten zweiten Dichtmittel (32) wenigstens einen zweiten Ring aus Elastomer (32a) aufweisen, der auf der Ebene des besagten zweiten Flusswegs (12) angeordnet ist.

7. Druckluftpistole (1) gemäß Patentanspruch 5), **dadurch gekennzeichnet, dass** die besagte geformte Muffe (50) und das besagte Gehäuse (51), das sie aufnimmt, mit Schraubmitteln (50a, 51 a) versehen sind, die dazu geeignet sind, eine wechselseitige Verbindung zu gewährleisten.

## Revendications

1. Pistolet à l'air comprimé (1) comprenant un corps (2) qui est doté d'une poignée (3) et dans lequel il est possible d'identifier:
- une première chambre (4) dotée d'une première bouche (5) pour la communication avec une ligne d'alimentation d'air comprimé;
- une deuxième chambre (6) dotée d'une deuxième bouche (7) pour la communication avec un élément apte à recevoir l'air comprimé;
- une chambre intermédiaire (8) dans laquelle il est possible d'identifier:
- une première voie de flux (11) configurée pour être mise en communication avec ladite première chambre (4);
- une deuxième voie de flux (12) configurée pour être mise en communication avec l'environnement extérieur (E);
- une troisième voie de flux (13) communiquant avec ladite deuxième chambre (6) et comprise entre ladite première voie de flux (11) et ladite deuxième voie de flux (12);
- un obturateur (14) disposé de façon à ce qu'il passe à travers ladite première voie de flux (11) et ladite deuxième voie de flux (12);
- des moyens de déplacement (15) configurés pour définir de différentes positions dudit obturateur (14) par rapport auxdites voies de flux, lesdites positions comprenant:
- une première position dans laquelle ladite deuxième voie de flux (12) est fermée et ladite première voie de flux (11) est ouverte pour mettre ladite première chambre (4) en communication avec ladite chambre intermédiaire (8);
- une deuxième position dans laquelle ladite deuxième voie de flux (12) et ladite première voie de flux (11) sont toutes les deux fermées;
- une troisième position dans laquelle ladite première voie de flux (11) est fermée et ladite deuxième voie de flux (12) est ouverte de façon à mettre ladite chambre intermédiaire (8) en communication avec l'environnement extérieur (E),
ledit obturateur (14) comprenant un corps galbé unique se développant principalement le long d'une direction longitudinale (X) et dans lequel il est possible d'identifier une pluralité de zones cylindriques (20, 21, 22, 23, 24) coaxiales entre elles et disposées l'une après l'autre qui comprennent:
- une zone initiale (20);
- une première zone (21) configurée pour coopérer avec ladite première voie de flux (11) par l'interposition de premiers moyens d'étanchéité (31);
- une deuxième zone (22) configurée pour coopérer avec ladite deuxième voie de flux (12) par l'interposition de deuxièmes moyens d'étanchéité (32);
- une zone intermédiaire (23) comprise entre ladite première zone (21) et ladite deuxième zone (22) et configurée pour être disposée à hauteur de ladite troisième voie de flux (13);
- une zone finale (24) disposée en aval de ladite deuxième zone (22),
ladite zone initiale (20) et ladite zone finale (24) étant en contact avec lesdits moyens de déplacement (15);
ledit pistolet étant **caractérisé en ce que:**
- ladite deuxième zone (22) est comprise entre ladite zone intermédiaire (23) et ladite zone finale (24) et son diamètre (D2) est inférieur par rapport aux diamètres de ladite zone intermédiaire (23) et de ladite zone finale (24);
- ladite deuxième zone (22) comprend une première zone biseautée (22a) de connexion avec ladite zone intermédiaire (23) et une deuxième zone biseautée (22b) de connexion avec ladite zone finale (24);
- lesdites zones biseautées (22a, 22b) sont configurées pour coopérer alternativement avec lesdits deuxièmes moyens d'étanchéité (32);
- ladite première zone (21) est reliée à ladite zone intermédiaire (23) adjacente à celle-ci au moyen d'une troisième zone biseautée (21 a).

2. Pistolet à l'air comprimé (1) selon la revendication 1), **caractérisé en ce que** le diamètre (D1) de ladite première zone (21) est plus grand que le diamètre (D3) de ladite zone intermédiaire (23) et est configuré de manière à coopérer avec lesdits premiers moyens d'étanchéité (31).

3. Pistolet à l'air comprimé (1) selon l'une quelconque des revendications précédentes, **caractérisé en ce que** ladite zone initiale (20) comprend un collier biseauté (20a) qui la délimite par rapport à ladite première zone (21).

4. Pistolet à l'air comprimé (1) selon l'une quelconque des revendications précédentes, **caractérisé en ce que** lesdits moyens de déplacement (15) comprennent:
- un ressort de contraste (17) logé dans ladite première chambre (4) et interposé entre ledit corps (2) dudit pistolet et ladite zone initiale (20) dudit obturateur (14);
- un levier de manoeuvre (18) ayant une extrémité (18a) reliée audit corps (2) dudit pistolet au moyen d'un pivot (19), l'extrémité opposée (18b) libre pour être saisie par un opérateur et la zone intermédiaire (18c) mise en contact avec ladite zone finale (24) dudit obturateur (14).

5. Pistolet à l'air comprimé (1) selon l'une quelconque des revendications précédentes, **caractérisé en ce que** ladite chambre intermédiaire (8) est réalisée en un manchon galbé (50) disposé dans un logement (51) réalisé dans ledit corps (2) dudit pistolet, ledit manchon galbé (50) étant doté de ladite première voie de flux (11), de ladite deuxième voie de flux (12) et de ladite troisième voie de flux (13).

6. Pistolet à l'air comprimé (1) selon l'une quelconque des revendications précédentes, **caractérisé en ce que** lesdits premiers moyens d'étanchéité (31) comprennent au moins un premier anneau en élastomère (31 a) disposé à hauteur de ladite première voie de flux (11) et lesdits deuxièmes moyens d'étanchéité (32) comprennent au moins un deuxième anneau en élastomère (32a) disposé à hauteur de ladite deuxième voie de flux (12).

7. Pistolet à l'air comprimé (1) selon la revendication 5), **caractérisé en ce que** ledit manchon galbé (50) et ledit logement (51) qui l'accueille sont dotés de moyens filetés (50a, 51 a) indiqués pour garantir une connexion réciproque.
